# EUROPÄISCHE PATENTANMELDUNG

(11) **EP 2 395 066 A1**
(43) Veröffentlichungstag der Anmeldung: **14.12.2011**
(21) Anmeldenummer: 10165407.7
(22) Anmeldetag: 09.06.2010
(51) Int. Cl.: C10G 2/00, C10J 3/86

(54) **Produktionsanlage für Chemierohstoffe oder Brennstoffe**

(71) Anmelder: SIEMENS AKTIENGESELLSCHAFT, 80333 München (DE)
(72) Erfinder: Graeber, Carsten, 91056, Erlangen (DE); Birley, Roland, 96050, Bamberg (DE); Görsch, Christian, 09599, Freiberg (DE); Klostermann, Doris, 09599, Freiberg (DE); Zimmermann, Gerhard, 91315, Höchstadt/Aisch (DE)

(57) **Zusammenfassung**

Die Erfindung betrifft eine Produktionsanlage (1) für Chemierohstoffe oder Brennstoffe, umfassend eine Vergasungseinrichtung (2), eine Syntheseeinrichtung (17) zur Synthese aus Kohlenmonoxid und Wasserstoff und eine Gasbehandlungseinrichtung (12) für vergaste Rohstoffe von der Vergasungseinrichtung (2) zur Syntheseeinrichtung (17), wobei eine erste Dampfleitung (28) von der Vergasungseinrichtung (2) zur Syntheseeinrichtung (17) zur Wärmeübertragung auf einen in der Vergasungseinrichtung (2) erzeugten Dampf vorgesehen ist. Die Erfindung betrifft ferner ein Verfahren zum Betrieb einer Produktionsanlage (1) für Chemierohstoffe oder Brennstoffe, bei dem in einem ersten Schritt (100) ein Rohstoff vergast wird, in einem zweiten Schritt (200) das erzeugte Gas gekühlt wird, in einem dritten Schritt (300) das Gas für eine Synthese aus Kohlenmonoxid und Wasserstoff verwendet wird und in einem vierten Schritt (400) das Gas aus der Synthese gekühlt wird, wobei im zweiten Schritt (200) bei der Kühlung des Gases Dampf erzeugt wird, der im vierten Schritt (400) bei der weiteren Kühlung des Gases überhitzt wird.

## Beschreibung

Die Erfindung betrifft eine Produktionsanlage für Chemierohstoffe oder Brennstoffe, sowie ein Verfahren zum Betrieb einer solchen Anlage.

Hersteller von Kraftwerken und Energieversorgungsunternehmen, aber auch von Industrieunternehmen, stehen in der Pflicht, ihre Anlagen möglichst umweltschonend zu gestalten und zu betreiben. Um die CO₂-Emissionen zu senken, gilt es zum einen, die Effizienz im bestehenden Anlagenpark und bei Neuanlagen zu steigern, und zum anderen, Kohlendioxid aus Kraftwerken oder industriellen Prozessen abzutrennen und sicher zu lagern.

Das grundsätzliche Konzept über den Weg der Vergasung aus festen oder flüssigen Rohstoffen beispielsweise synthetisches Erdgas (SNG, Substitute Natural Gas) herzustellen ist bekannt. Neben IGCC-Anlagen (Integrated Gasification Combined Cycle = Gas- und Dampfturbineneanlage mit integrierter Vergasung) ist die Vergasungstechnologie aber auch in der chemischen Industrie im Einsatz, da sich aus dem Synthesegas neben synthetischen Brennstoffen wie Diesel und synthetisches Erdgas auch Chemieprodukte wie Ammoniak, Methanol oder Dimethylether erzeugen lassen.

Die Erzeugung des Synthesegases erfolgt unter erhöhtem Druck in einer exothermen Reaktion unter Freisetzung hoher Wärmemengen bei hoher Temperatur. Eine Möglichkeit, das Rohgas für das weitere Verfahren abzukühlen und mit Wasser aufzusättigen ist der sogenannte Vollquench, bei dem die Abkühlung des Rohgases bis zu seiner Sättigung vollständig über das Einbringen von Wasser bzw. Wasserdampf in das Rohgas erfolgt. Alternativ kann die Rohgasabwärme zur Erzeugung von Dampf unter hohem Druck - gesättigt oder nur leicht überhitzt - genutzt werden, indem eine erste Abkühlung des Rohgases in einem Strahlungskühler mit nachfolgendem Wasserquench erfolgt.

In der Regel hat das gewünschte Produkt einen spezifisch geringeren C-Gehalt (Kohlenstoffgehalt) als der ursprünglich eingesetzte Brennstoff. Besonders deutlich wird das z.B. bei der Herstellung von CH₄ (Methan, SNG) aus Braunkohle. Deshalb muss entweder der C-Gehalt über den Syntheseweg im Verhältnis zum H₂-Gehalt reduziert werden (CO-Shift und CO₂-Abtrennung) oder der H₂-Gehalt entsprechend erhöht werden.

Wird das entstandene Rohgas indirekt mit Wasser gekühlt, kann die Abwärme aus dem exothermen Vergasungsprozess in einem Wasser-Dampf-Kreislauf der Anlage verwendet werden. Allerdings wird der Dampf üblicherweise aufgrund der Verunreinigungen im Rohgas materialbedingt nicht überhitzt werden, so dass trotz der hohen Temperaturen im Rohgas lediglich Sattdampf oder leicht überhitzter Dampf aus der Abwärme gewonnen werden kann.

Aufgabe der Erfindung ist es, die genannte Vorrichtung bzw. das genannte Verfahren weiterzuentwickeln, so dass eine verbesserte Nutzung der Abwärme entlang des Gasweges erzielt wird.

Erfindungsgemäß wird die auf eine Produktionsanlage gerichtete Aufgabe gelöst durch eine Produktionsanlage für Chemierohstoffe oder Brennstoffe, umfassend eine Vergasungseinrichtung, eine Syntheseeinrichtung zur Synthese aus Kohlenmonoxid und Wasserstoff und eine Gasbehandlungseinrichtung für vergaste Rohstoffe, die die Vergasungseinrichtung mit der Syntheseeinrichtung verbindet, wobei eine erste Dampfleitung von der Vergasungseinrichtung zur Syntheseeinrichtung zur Wärmeübertragung auf einen in der Vergasungseinrichtung erzeugten Dampf vorgesehen ist.

Die Erfindung beruht demnach auf dem Gedanken, den im Abhitzesystem der Vergasung erzeugten üblicherweise nur gesättigten oder leicht überhitzten Dampf im Syntheseprozess (z.B. in einem Methanisierungsprozess), zu überhitzen und zwar in einer Weise, dass dieser Dampf effizient in üblichen Dampfturbinen zur Erzeugung von elektrischer Energie oder dem Antrieb von Maschinen genutzt werden kann. Dies schließt auch die Verwendung als Prozessdampf ein.

Damit eine effiziente Nutzung des überhitzten Dampfes erfolgen kann, ist es zweckmäßig, wenn die Vergasungseinrichtung einen Vergaser und eine vom Vergaser kommende Rohgasleitung, die in die Gasbehandlungseinrichtung übergeht, umfasst, sowie einen Strahlungskühler, der primärseitig in die Rohgasleitung und sekundärseitig zwischen eine erste Speisewasserleitung und die erste Dampfleitung geschaltet ist. Im Gegensatz zum Wasserquench, bei dem Wasser direkt in das Rohgas gegeben wird, bleiben bei der Strahlungskühlung Wasser und Rohgas getrennt, so dass Wasser einfach und ohne Verunreinigung erwärmt werden kann.

Zweckmäßigerweise umfasst die Produktionsanlage eine Dampfturbine und einen an die Dampfturbine gekoppelten Generator, wobei die Dampfturbine dampfseitig mit der Syntheseeinrichtung und speisewasserseitig über die erste Speisewasserleitung mit der Vergasungseinrichtung verbunden ist.

Vorteilhafter Weise umfasst die Syntheseeinrichtung eine erste und eine zweite Synthesestufe, die über eine erste Syntheseleitung miteinander verbunden sind, wobei ein erster Wärmetauscher primärseitig zwischen der ersten und der zweiten Synthesestufe in die erste Syntheseleitung und sekundärseitig zwischen die erste Dampfleitung und eine in die Dampfturbine mündende Frischdampfleitung geschaltet ist. Die Synthese wird in verschiedene Stufen aufgeteilt, weil bei höherer Temperatur eine schnelle Kinetik, aber ein ungünstiges chemisches Gleichgewicht vorliegt und bei niedrigen Temperaturen zwar sich das Gleichgewicht im Sinne des Prozesses verbessert, aber die Kinetik abnimmt. Da die erste Stufe üblicherweise die Hochtemperaturstufe ist, ist ein Wärmetausch mit dem Ziel der Dampfüberhitzung direkt im Anschluss an diese Stufe besonders vorteilhaft.

Es kann sogar vorteilhaft sein, wenn ein zweiter Wärmetauscher primärseitig zwischen dem ersten Wärmetauscher und der zweiten Synthesestufe in die erste Syntheseleitung und sekundärseitig zwischen eine zweite Speisewasserleitung und eine zweite Dampfleitung zum ersten Wärmetauscher geschaltet ist, um die nach der Überhitzung im abgekühlten Syntheseprodukt noch vorhandenen Wärme für eine Verdampfung von Speisewasser zu verwenden. Der erzeugte Dampf kann dann ebenfalls dem ersten Wärmetauscher zugeführt und dort überhitzt werden.

Weiterhin vorteilhaft ist es, wenn die Syntheseeinrichtung eine dritte Synthesestufe umfasst, die über eine zweite Syntheseleitung mit der zweiten Synthesestufe verbunden ist und wobei zwischen der zweiten und dritten Synthesestufe ein dritter Wärmetauscher primärseitig in die zweite Syntheseleitung und sekundärseitig zwischen eine dritte Speisewasserleitung und eine dritte Dampfleitung zum ersten Wärmetauscher geschaltet ist. Somit kann zur weiteren Sattdampferzeugung neben der Abwärme des Rohgases in der Vergasungseinrichtung und der Abwärme der exothermen Synthesereaktion durch den zweiten Wärmetauscher auch die Abwärme nach der zweiten Synthesestufe genutzt werden.

Es ist zweckmäßig, wenn eine dritte Syntheseleitung von der dritten Synthesestufe abzweigt und ein vierter Wärmetauscher primärseitig in die dritte Syntheseleitung und sekundärseitig zwischen eine vierte Speisewasserleitung und mindestens eine der zweiten oder dritten Speisewasserleitungen geschaltet ist, da sich durch Vorwärmen des Speisewassers der Prozesswirkungsgrad verbessert.

Zweckmäßigerweise ist die vierte Speisewasserleitung der Dampfturbine in Strömungsrichtung eines Speisewassers nachgeordnet.

Ebenfalls zweckmäßig ist es, wenn mindestens eine der zweiten oder dritten Dampfleitungen in die erste Dampfleitung mündet.

In einer vorteilhaften Ausführungsform ist ein Wasser-Gas-Shift-Reaktor in die Gasbehandlungseinrichtung geschaltet. Die Shift-Reaktion ist ebenfalls exotherm und könnte beispielsweise zur Erzeugung von Mittel- oder Niederdruckdampf verwendet werden.

Vorzugsweise ist eine Reinigungseinrichtung zur Abtrennung von Schwefelverbindungen und gegebenenfalls Kohlendioxid in die Gasbehandlungseinrichtung geschaltet. Insbesondere muss H₂S abgetrennt werden, u.a. weil es für die Katalysatoren im Syntheseverfahren schädlich ist. Eine Abtrennung von Kohlendioxid erfolgt zur Einstellung der erforderlichen Stöchiometrie für die nachfolgende Synthese.

Zweckmäßiger Weise ist die Syntheseeinrichtung eine Methanisierungseinrichtung. Das dort hergestellte SNG kann Erdgas für den Betrieb einer Gas- oder einer Gas- und Dampfturbinenanlage ersetzen.

Ebenfalls zweckmäßig ist es, wenn die Syntheseeinrichtung eine Einrichtung zur Herstellung von Methanol ist, das in der Chemie vielseitige Verwendung findet.

Im erfinderischen Verfahren zum Betrieb einer Produktionsanlage für Chemierohstoffe oder Brennstoffe wird in einem ersten Schritt ein Rohstoff vergast, in einem zweiten Schritt das erzeugte Gas indirekt gekühlt, in einem dritten Schritt das Gas für eine Synthese aus Kohlenmonoxid und Wasserstoff verwendet und in einem vierten Schritt das Syntheseprodukt gekühlt, wobei im zweiten Schritt bei der Kühlung des Gases Dampf erzeugt wird, der im vierten Schritt bei der Kühlung des Syntheseprodukts überhitzt wird.

Die Vorteile der Vorrichtung ergeben sich auch für das Verfahren.

Erfindungsgemäß ist es daher bevorzugt, wenn im zweiten Schritt Wasser in einem Strahlungskühler verdampft wird, wobei der vergaste Rohstoff gekühlt wird.

Es ist insbesondere bevorzugt, wenn der im vierten Schritt überhitzte Dampf einer Dampfturbine zugeführt und dort entspannt wird und der entspannte und kondensierte Dampf der Verwendung im zweiten Schritt zugeführt wird.

Es ist ebenfalls bevorzugt, wenn in einem fünften Schritt das gekühlte Syntheseprodukt weiter gekühlt wird, indem Wasser im indirekten Wärmetausch mit dem Syntheseprodukt verdampft wird.

Es ist weiterhin bevorzugt, wenn in einem sechsten Schritt das Syntheseprodukt in einer weiteren Synthesestufe verwendet wird und in einem siebten Schritt das Syntheseprodukt aus der weiteren Synthesestufe gekühlt wird, indem Wasser im indirekten Wärmetausch mit dem Gas verdampft wird.

Besonders bevorzugt wird der in mindestens einem der Schritte 5 oder 7 erzeugte Dampf im vierten Schritt verwendet und dabei überhitzt.

Es ist zweckmäßig, wenn in einem achten Schritt das Syntheseprodukt eine dritte Synthesestufe durchläuft und in einem neunten Schritt das Syntheseprodukt aus der dritten Synthesestufe gekühlt wird, indem Speisewasser im indirekten Wärmetausch mit dem Syntheseprodukt erwärmt wird.

Zweckmäßiger Weise wird zwischen dem zweiten und dem dritten Schritt ein Kohlenmonoxidanteil im Gas reduziert und ein Wasserstoffanteil im Gas erhöht.

Weiterhin zweckmäßig ist es, wenn zwischen dem zweiten und dem dritten Schritt Schwefelverbindungen und gegebenenfalls Kohlendioxid aus dem Gas abgetrennt werden.

Der Vorteil der Erfindung liegt in der dampfseitigen Kopplung der Abhitzenutzung des Vergasungsprozesses mit dem nachgeschalteten Syntheseprozess. Durch diese optimale, wärmetechnische Verbindung wird die Effizienz des Gesamtprozesses gesteigert.

Die Erfindung wird beispielhaft anhand der Zeichnungen näher erläutert. Es zeigen schematisch:
Figur 1 eine Produktionsanlage für Chemierohstoffe oder Brennstoffe gemäß der Erfindung und
Figur 2 ein Ablaufdiagramm für das Verfahren zum Betrieb einer Produktionsanlage für Chemierohstoffe oder Brennstoffe.

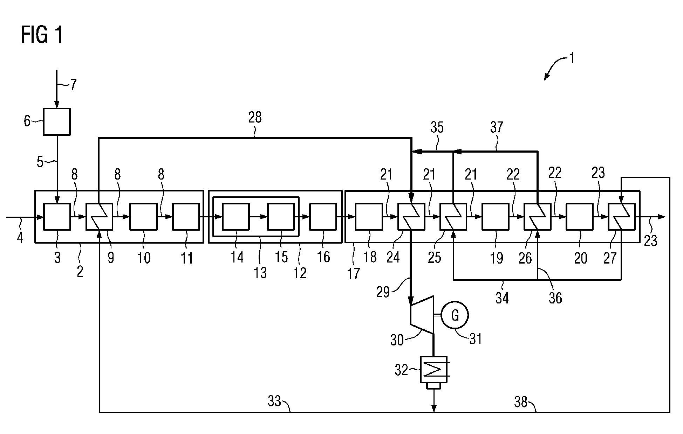

Die Figur 1 zeigt schematisch und beispielhaft eine erfindungsgemäße Produktionsanlage 1 für Chemierohstoffe oder Brennstoffe.

Die Vergasungseinrichtung 2 weist einen Vergaser 3 mit einer Zufuhrleitung 4 für (meist fossilen) Rohstoff auf. Es können aber auch z.B. Biomasse oder Raffinerierückstände verarbeitet werden. Weiterhin ist eine Zufuhrleitung 5 für Sauerstoff vorhanden, die in den Vergaser 3 einmündet.

Nach dem Stand der Technik ist zur Bereitstellung des für die Vergasung des Rohstoffs benötigten Sauerstoffs dem Vergaser 3 über die Sauerstoffleitung 5 eine Luftzerlegungsanlage 6 vorgeschaltet, der über eine Luftleitung 7 Luft zugeführt wird.

Im Vergaser 3 wird der Rohstoff unter Zuführung von Dampf (nicht gezeigt) zusammen mit dem Sauerstoff partiell oxidiert und ein Rohgas (Synthesegas) gebildet, das hauptsächlich Kohlenmonoxid (CO) und Wasserstoff (H₂) enthält. Damit die Rohgasabwärme zur Erzeugung von Dampf unter hohem Druck - gesättigt oder nur leicht überhitzt - genutzt werden kann, wird das Rohgas über eine Rohgasleitung 8 einem Strahlungskühler 9 zugeführt. Dem Strahlungskühler 9 ist eine Quench-Sektion 10 nachgeschaltet, in der vorzugsweise durch Eindüsen von Wasser eine weitere Abkühlung des Rohgases erfolgt. Nach der Wasserquenchung 10 wird das Rohgas einer Nassentstaubung sowie einer Halogen- und Alkaliwäsche zugeführt (Venturi 11). Das zur Quenchung in der Quench-Sektion 10 verwendete Wasser nimmt Vergasungsrückstände, wie z.B. Asche, auf und wird einer Abwasserbehandlung (nicht gezeigt) zugeführt.

Das wasserdampfgesättigte staubfreie Gas wird nachfolgend einer Gasbehandlungseinrichtung 12 zugeführt. Die Gasbehandlungseinrichtung 12 umfasst einen sogenannten Shift-Reaktor 13 für die CO-Konvertierung von Kohlenmonoxid im Synthesegas mit Hilfe von Wasserdampf zu CO₂ und H₂. Der Shift-Reaktor 13 umfasst üblicherweise eine Hochtemperatur- 14 und eine Niedertemperatur-Shift-Stufe 15. Anschließend werden Schwefelverbindungen und gegebenenfalls zur Anpassung der Stöchiometrie für das nachfolgende Syntheseverfahren auch CO₂ mit Hilfe eines chemischen oder physikalischen Waschverfahrens in einer Reinigungseinrichtung 16 abgetrennt. Das CO₂ kann dann verdichtet und z.B. zu einer Speicherstätte transportiert werden.

Nach der Reinigung wird das Synthesegas einer Syntheseeinrichtung 17 zugeführt, in der aus Kohlenmonoxid und Wasserstoff beispielsweise Methan gewonnen wird. Zu diesem Zweck verfügt die Syntheseeinrichtung 17 meist über mehrere Synthesestufen 18, 19 und 20, die über erste 21 und zweite Syntheseleitungen 22 miteinander verbunden sind. Eine dritte Syntheseleitung 23 führt von der dritten Synthesestufe 20 weg. Die Abwärme der exothermen Reaktionen in den Synthesestufen 18, 19 und 20 wird über in die Syntheseleitungen 21, 22 und 23 geschalteten Wärmetauscher 24, 25, 26 und 27 abgeführt.

Gemäß der Erfindung wird die Abwärme aus der Vergasung dazu verwendet, im Strahlungskühler 9 Wasser zu verdampfen und den Dampf zur Überhitzung im ersten Wärmetauscher 24 der Syntheseinrichtung 17 über die erste Dampfleitung 28 zuzuführen. Der überhitzte Dampf kann als Prozessdampf verwendet werden, oder, wie in Figur 1 gezeigt, über eine Frischdampfleitung 29 einer Dampfturbine 30 zugeführt werden, die zur Stromerzeugung mit einem Generator 31 verbunden ist. Der in der Turbine 30 entspannte Dampf wird im Kondensator 32 wieder verflüssigt und als Speisewasser über die erste Speisewasserleitung 33 in die Vergasungseinrichtung 2 zurückgeführt.

Nach der Abkühlung des Syntheseprodukts aus der ersten Synthesestufe 18 im ersten Wärmetauscher 24 ist der Wärmeinhalt des Syntheseprodukts noch ausreichend hoch, um damit im zweiten Wärmetauscher 25 Speisewasser aus der zweiten Speisewasserleitung 34 zu verdampfen. Der erzeugte Dampf wird über eine zweite Dampfleitung 35 dem ersten Wärmetauscher 24 zur Überhitzung zugeführt.

Die Abwärme der zweiten Synthesestufe 19 fällt geringer als die der ersten Synthesestufe 18 aus, lässt sich aber ebenfalls im Dampfprozess nutzen. Hierzu wird Speisewasser über die dritte Speisewasserleitung 36 dem dritten Wärmetauscher 26 sekundärseitig zugeführt und dort im indirekten Wärmetausch mit dem Syntheseprodukt verdampft. Zur Überhitzung wird dieser Dampf über die dritte Dampfleitung 37 ebenfalls dem ersten Wärmetauscher 24 zugeführt.

Eine vierte Speisewasserleitung 38 mündet, vom Kondensator 32 kommend, in den vierten Wärmetauscher 27, damit Speisewasser im Wärmetausch mit dem Syntheseprodukt aus der dritten Synthesestufe 20 erwärmt werden und über die zweiten und dritten Speisewasserleitungen 34, 36 den zweiten und dritten Wärmetauschern 25, 26 zur Verdampfung zugeführt werden kann.

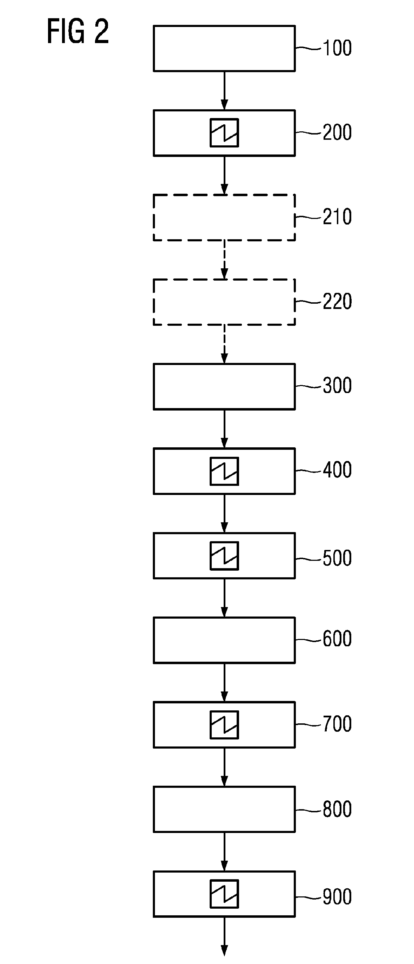

Figur 2 beschreibt das Verfahren zum Betrieb einer Produktionsanlage für Chemierohstoffe oder Brennstoffe, bei dem in einem ersten Schritt 100 im Vergaser 3 (siehe Figur 1) ein Rohstoff vergast wird, in einem zweiten Schritt 200 das erzeugte Gas beispielsweise in einem Strahlungskühler 9 gekühlt wird, in einem dritten Schritt 300 das Gas für eine Synthese aus Kohlenmonoxid und Wasserstoff in einer Syntheseeinrichtung 17 verwendet wird und in einem vierten Schritt 400 das Gas aus der Synthese beispielsweise in einem ersten Wärmetauscher 24 gekühlt wird. Nach der Erfindung wird im zweiten Schritt 200 bei der Kühlung des Gases im Strahlungskühler 9 Dampf erzeugt, der im vierten Schritt 400 bei der weiteren Kühlung des Gases im ersten Wärmetauscher 24 überhitzt wird.

In einem fünften Schritt 500 wird das gekühlte Syntheseprodukt weiter abgekühlt, wobei Dampf erzeugt wird. Im sechsten Schritt 600 durchläuft das weiter abgekühlte Syntheseprodukt eine zweite Synthesestufe 19 und wird in einem siebten Schritt 700 im dritten Wärmetauscher 26 gekühlt, indem Speisewasser im Wärmetausch mit dem Syntheseprodukt verdampft wird.

Im achten Schritt 800 durchläuft das bei der Verdampfung des Speisewassers in Schritt 700 abgekühlte Syntheseprodukt eine dritte Synthesestufe 20 und wird in einem neunten Schritt 900 im vierten Wärmetauscher 27 gekühlt, indem Speisewasser im Wärmetausch mit dem Syntheseprodukt vorgewärmt wird.

Im ersten Zwischenschritt 210 wird zwischen dem zweiten 200 und dem dritten 300 Schritt in einer Wasser-Gas-Shift-Reaktion 12 ein Kohlenmonoxidanteil im Gas reduziert und ein Wasserstoffanteil im Gas erhöht.

In einem zweiten Zwischenschritt 220 werden in einer Reinigungseinrichtung 16 zwischen dem zweiten 200 und dem dritten Schritt 300 Schwefelverbindungen, insbesondere H₂S, und gegebenenfalls Kohlendioxid aus dem Gas abgetrennt.

## Patentansprüche

1. Produktionsanlage (1) für Chemierohstoffe oder Brennstoffe, umfassend eine Vergasungseinrichtung (2), eine Syntheseeinrichtung (17) zur Synthese aus Kohlenmonoxid und Wasserstoff und eine Gasbehandlungseinrichtung (12) für vergaste Rohstoffe, die die Vergasungseinrichtung (2) mit der Syntheseeinrichtung (17) verbindet, **dadurch gekennzeichnet, dass** eine erste Dampfleitung (28) von der Vergasungseinrichtung (2) zur Syntheseeinrichtung (17) zur Wärmeübertragung auf einen in der Vergasungseinrichtung (2) erzeugten Dampf vorgesehen ist.

2. Produktionsanlage (1) nach Anspruch 1, wobei die Vergasungseinrichtung (2) einen Vergaser (3) und eine vom Vergaser (3) kommende Rohgasleitung (8) umfasst, die in die Gasbehandlungseinrichtung (12) übergeht, sowie einen Strahlungskühler (9), der primärseitig in die Rohgasleitung (8) und sekundärseitig zwischen eine erste Speisewasserleitung (33) und die erste Dampfleitung (28) geschaltet ist.

3. Produktionsanlage (1) nach Anspruch 2, weiter umfassend eine Dampfturbine (30) und einen an die Dampfturbine (30) gekoppelten Generator (31), wobei die Dampfturbine (30) dampfseitig mit der Syntheseeinrichtung (17) und speisewasserseitig über die erste Speisewasserleitung (33) mit der Vergasungseinrichtung (2) verbunden ist.

4. Produktionsanlage (1) nach Anspruch 3, wobei die Syntheseeinrichtung (17) eine erste (18) und eine zweite Synthesestufe (19) umfasst, die über eine erste Syntheseleitung (21) miteinander verbunden sind, wobei ein erster Wärmetauscher (24) primärseitig zwischen der ersten (18) und der zweiten Synthesestufe (19) in die erste Syntheseleitung (21) und sekundärseitig zwischen die erste Dampfleitung (28) und eine in die Dampfturbine (30) mündende Frischdampfleitung (29) geschaltet ist.

5. Produktionsanlage (1) nach Anspruch 4, wobei ein zweiter Wärmetauscher (25) primärseitig zwischen dem ersten Wärmetauscher (24) und der zweiten Synthesestufe (19) in die erste Syntheseleitung (21) und sekundärseitig zwischen eine zweite Speisewasserleitung (34) und eine zweite Dampfleitung (35) zum ersten Wärmetauscher (24) geschaltet ist.

6. Produktionsanlage (1) nach einem Ansprüche 4 oder 5, wobei die Syntheseeinrichtung (17) eine dritte Synthesestufe (20) umfasst, die über eine zweite Syntheseleitung (22) mit der zweiten Synthesestufe (19) verbunden ist und wobei zwischen der zweiten (19) und dritten Synthesestufe (20) ein dritter Wärmetauscher (26) primärseitig in die zweite Syntheseleitung (22) und sekundärseitig zwischen eine dritte Speisewasserleitung (36) und eine dritte Dampfleitung (37) zum ersten Wärmetauscher (24) geschaltet ist.

7. Produktionsanlage (1) nach Anspruch 6, wobei eine dritte Syntheseleitung (23) von der dritten Synthesestufe (20) abzweigt und ein vierter Wärmetauscher (27) primärseitig in die dritte Syntheseleitung (23) und sekundärseitig zwischen eine vierte Speisewasserleitung (38) und mindestens eine der zweiten oder dritten Speisewasserleitungen (34, 36) geschaltet ist.

8. Produktionsanlage (1) nach Anspruch 7, wobei die vierte Speisewasserleitung (38) der Dampfturbine (30) in Strömungsrichtung eines Speisewassers nachgeordnet ist.

9. Produktionsanlage (1) nach den Ansprüchen 6 und 7, wobei mindestens eine der zweiten oder dritten Dampfleitungen (35, 37) in die erste Dampfleitung (28) mündet.

10. Produktionsanlage (1) nach einem der vorhergehenden Ansprüche, wobei ein Wasser-Gas-Shift-Reaktor (13) in die Gasbehandlungseinrichtung (12) geschaltet ist.

11. Produktionsanlage (1) nach einem der vorhergehenden Ansprüche, wobei eine Reinigungseinrichtung (16) zur Abtrennung von Schwefelverbindungen und Kohlendioxid in die Gasbehandlungseinrichtung (12) geschaltet ist.

12. Produktionsanlage (1) nach einem der vorhergehenden Ansprüche, wobei die Syntheseeinrichtung (17) eine Methanisierungseinrichtung ist.

13. Produktionsanlage (1) nach einem der Ansprüche 1 bis 9, wobei die Syntheseeinrichtung (17) eine Einrichtung zur Herstellung von Methanol ist.

14. Verfahren zum Betrieb einer Produktionsanlage (1) für Chemierohstoffe oder Brennstoffe, bei dem in einem ersten Schritt (100) ein Rohstoff vergast wird, in einem zweiten Schritt (200) das erzeugte Gas gekühlt wird, in einem dritten Schritt (300) das Gas für eine Synthese aus Kohlenmonoxid und Wasserstoff verwendet wird und in einem vierten Schritt (400) das Syntheseprodukt gekühlt wird, **dadurch gekennzeichnet, dass** im zweiten Schritt (200) bei der Kühlung des Gases Dampf erzeugt wird, der im vierten Schritt (400) bei der Kühlung des Syntheseprodukts überhitzt wird.

15. Verfahren nach Anspruch 14, wobei im zweiten Schritt (200) Wasser in einem Strahlungskühler (9) verdampft wird, wobei der vergaste Rohstoff gekühlt wird.

16. Verfahren nach Anspruch 14 oder 15, wobei der überhitzte Dampf einer Dampfturbine (30) zugeführt und dort entspannt wird und der entspannte und kondensierte Dampf der Verwendung im zweiten Schritt (200) zugeführt wird.

17. Verfahren nach einem der Ansprüche 14 bis 16, wobei in einem fünften Schritt (500) das gekühlte Syntheseprodukt weiter gekühlt wird, indem Wasser im indirekten Wärmetausch mit dem Syntheseprodukt verdampft wird.

18. Verfahren nach einem der Ansprüche 14 bis 17, wobei in einem sechsten Schritt (600) das Syntheseprodukt in einer weiteren Synthesestufe verwendet wird und in einem siebten Schritt (700) das Syntheseprodukt aus der weiteren Synthesestufe gekühlt wird, indem Wasser im Wärmetausch mit dem Produkt verdampft wird.

19. Verfahren nach den Ansprüchen 17 und 18, wobei der in mindestens einem der Schritte 5 (500) oder 7 (700) erzeugte Dampf im vierten Schritt (400) verwendet und dabei überhitzt wird.

20. Verfahren nach einem der Ansprüche 14 bis 19, wobei in einem achten Schritt (800) das Syntheseprodukt in einer dritten Synthesestufe verwendet wird und in einem neunten Schritt (900) das Syntheseprodukt aus der dritten Synthesestufe gekühlt wird, indem Speisewasser im indirekten Wärmetausch mit dem Syntheseprodukt erwärmt wird.

21. Verfahren nach einem der Ansprüche 14 bis 20, wobei zwischen dem zweiten (200) und dem dritten Schritt (300) ein Kohlenmonoxidanteil im Gas reduziert und ein Wasserstoffanteil im Gas erhöht wird.

22. Verfahren nach einem der Ansprüche 14 bis 21, wobei zwischen dem zweiten (200) und dem dritten Schritt (300) Schwefelverbindungen und Kohlendioxid aus dem Gas abgetrennt werden.
